# EUROPEAN PATENT APPLICATION

(11) **EP 0 987 499 A2**
(43) Date of publication of application: **22.03.2000**
(21) Application number: 99830452.1
(22) Date of filing: 16.07.1999
(51) Int. Cl.: F24D 19/10

(54) **Deviation and by-pass valve**

(30) Priority: 18.09.1998 IT RM980605
(71) Applicant: Fontecal S.p.A., 65010 Villanova Di Cepagatti, Pescara (IT)
(72) Inventor: Tesolin, Luciano, 65010 Villanova di Cepagatti, Pescara (IT)
(74) Representative: Iannone, Carlo Luigi

(57) **Abstract**

The invention relates to a deviation and by-pass valve, comprising a body valve (14), within which a chamber (7) is obtained, at least a first (1) and a second (3) inlet opening and an outlet opening from said chamber (7), a shutter element (8), provided within said chamber (7), bucking means (9), within said chamber (7), acting in such a way to maintain said shutter element, when in its rest position, in a position to close said second inlet opening (3), and a linear actuator (11), acting on said shutter element (8), against the action of said bucking means (9), to move the same from its rest position, following an outer control, or a pressure variation within the circuit including the valve.

## Description

The present invention relates to a deviation and by-pass valve.

More specifically, the invention concerns a three- or more way valve that can operate also as by-pass valve in case the activation conditions occur.

As it is well known, three- or more way valve is used in order to deviate the path of a tube canalised fluid toward alternative paths, while a by-pass valve is used to open an alternative vent path to the main path, or paths, of the fluid.

Deviation valves presently available on the market are essentially classified on the basis of the kind of control actuating the motion of the shutter, and can be generically classified as manual deviation valves, hydraulic deviation valves (pressostatic, flowstatic, presso-flowstatic, motorised deviation valves, pneumatic deviation valves and oleodynamic deviation valves.

By-pass valves presently available on the market can simple on-off valves variously controlled (manual, electric, etc control), used to open an vent alternative path for the fluid or valves suitably created for this function automatically intervening in case special pressure (absolute or differential) or temperature situations occur.

Particularly, the latter kind of valves is often used in the heating field.

In fact, in the heating plant, manual or automatic on-off valves can determine the complete interruption of water flow creating a thermal overcharge situation for the main exchanger of the boiler, since the means to eliminate heat produced by the burner lack, said situation, in absence of the by-pass valve, ending with the intervention of the safety members suitably provided against overpressures and over - temperatures.

On the contrary, providing a pressostatic by-pass hydraulic valve between inlet tube and return tube of the heating plant, the valve, opening, avoids thermal overcharge maintaining a minimum circulation of water within the boiler allowing to the thermostats provided within the tube at the outlet of the main exchanger, to opportunely sense the increase of the temperature of water flow and to immediately switch off the burner.

In the following the description particularly reference will be made to the heating field, and particularly to the double function water heat generator (boilers), also known as "mixed boilers", environment heating and sanitary hot water production fields, but it is well evident that this description must not be used as a limitation of the present invention, since the valve according to the invention can be used in different fields.

Main object of the present invention is that of providing a valve wherein the by-pass function is englobed in the deviation valve, and, in case special conditions occur requiring the eventual intervention of the by-pass valve, an automatic excitation occurs.

It is therefore specific object of the present invention a deviation and by-pass valve, comprising a body valve, within which a chamber is obtained, at least a first and a second inlet opening and an outlet opening from said chamber, a shutter element, provided within said chamber, bucking means, within said chamber, acting in such a way to maintain said shutter element, when in its rest position, in a position to close said second inlet opening, and a linear actuator, acting on said shutter element, against the action of said bucking means, to move the same from its rest position, following an outer control, or a pressure variation within the circuit including the valve.

Preferably, according to the invention, said bucking means are comprised of a spring.

Furthermore, according to the invention, said valve body can be separated or integral with a complex hydraulic group.

Always according to the invention, said linear actuator can act on said shutter element by a shaft.

Particularly, said linear actuator can be provided with a hydraulic, pneumatic, thermic, electric or electronic control.

The present invention will be now described, for illustrative but not limitative purposes, according to its preferred embodiments, with particular reference to the figures of the enclosed drawings, wherein:
figure 1 is a schematic view of a valve according to the invention; and
figure 2 shows a use of the valve according to the invention in a mixed boiler.

Observing now the figures of the enclosed drawings, it can be noted the structure of an embodiment of a valve according to the invention, in this case studied to operate in the hydraulic circuit of a mixed boiler, and particularly on the "cold branch", having two inlets and one outlet, the inlet of which indicated by reference number 1 is the one of the water returning from tube 2 of the heating system, the inlet indicated by reference number 3 is that receiving water exiting from the sanitary exchanger 4, while outlet 5, eventually by the pump 6, allows to send the water to the primary exchanger 19.

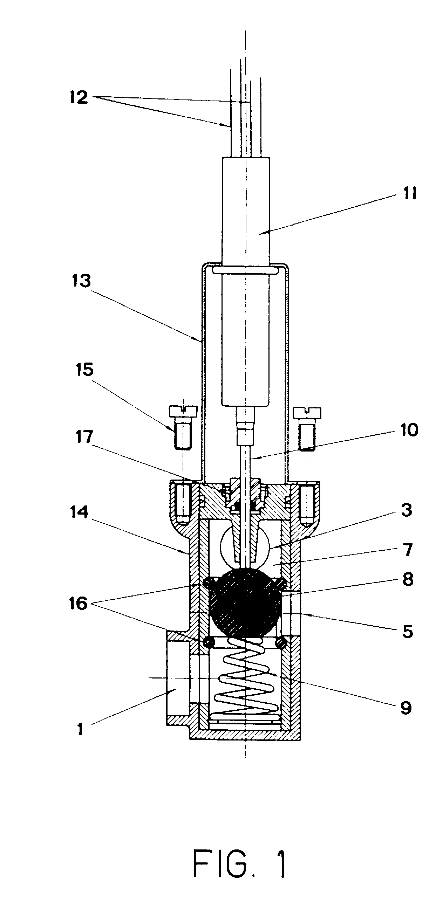

Observing particularly figure 1, valve according to the invention comprises a chamber 7, within which a shutter 8, preferably a sphere, is provided, on which a bucking spring 6 on one side and a shaft on the other side act, said shaft being coupled with an actuator 11, provided with electric wires 12 and fixing lugs 13.

Coupling between valve body 14 and the lugs of the actuator 11 is realised by screw 5.

On both abutments of the passages on which the shutter acts, O-rings 16 are provided, while on the shaft 10, within the portion passing through the valve body 14, a sealing 17 is provided.

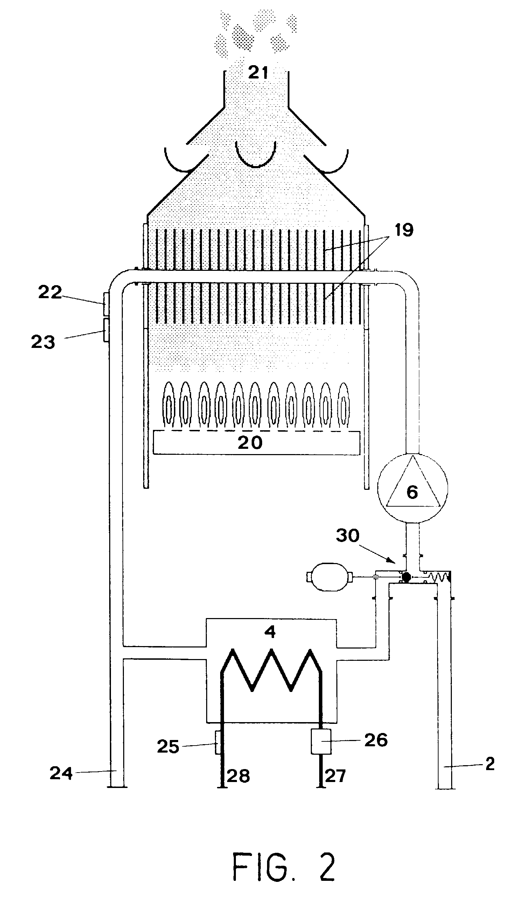

Mixed boiler shown as an example in figure 2 provides a return tube 2 of primary water from heating system, a pump 9, a main exchanger 19, a burner 20, a smoke discharge 21, a safety thermostat 22 and a heating thermostat 23, and a tube 24 for primary water toward the heating system. Furthermore, a sanitary exchanger 4 is provided, having a sanitary thermostatic 25 and a flow sensor 26, an inlet tube 27 for sanitary cold water and an outlet tube 28 for sanitary hot water.

In the solution of figure 2, the valve according to the invention, that will be generically indicated in this phase by reference number 30 acts both as deviation valve and as by-pass valve.

Coming now to particularly examine figure 1, in the rest position of the shutter 8 (deviation valve) opens the way toward the heating system.

In case it is required the preparation of sanitary hot water, the linear actuator 11 acts on the shutter 8, compressing spring 9, by the shaft 10 to switch the deviation valve closing way 1 of the heating system and opening way 3 toward the sanitary exchanger 4.

When the preparation of sanitary hot water is terminated, actuator 11 goes back and shutter 8, urged by the spring 9, returns in its rest position, opening again the way 1 of the heating system.

During the operation of the heating, thus with shutter 8, in rest position, possible electric, thermostatic or manual on-off valves of the system cannot determine the complete interruption of the water flow within the boiler thanks to the solution suggested according to the present invention.

On the contrary, in the solutions according to the known art, said solution would create a thermal overcharge situation for the primary exchanger 19 of the boiler since the vehicle to eliminate the heat generated by burner 10 would lack; said situation ends with the intervention of the safety elements provided by the system against overpressures and over - temperatures.

Furthermore, in the traditional systems, in some cases a pressostatic by-pass valve is provided between the tube to send water and the return tube of the heating system when interruptions of the flow occur in the heating system, valve, opening, avoids the thermic overcharge; in fact, maintenance of a minimum circulation gives the possibility to the thermostats provided on the tube exiting from the main exchanger 19 to opportunely sense the increase of the temperature of water flow and to promptly switch off the burner.

It is also known that a pressostatic by-pass valve is a device provided with a calibrated bucking spring normally keeping closed the passage (the shutter). The shutter is operated only by the overcoming of a pre-established value of hydrostatic pressure difference. In the boilers, the hydrostatic pressure difference is generated by the circulation pump, but until when the circuit of the heating system is opened, at the ends of the by-pass valve, a pressure difference sufficient to open the shutter of the valve is not created. Instead, when the flow in the heating system is almost to be null, the hydrostatic differential pressure threshold is overcome and the by-pass valve opens, thus giving the beneficial effect.

In view of the above, and further in view of the description of the structure of the valve according to the invention, it can be noted that it is able, in case the above described events occur, to automatically act as by-pass valve.

In fact, the shutter 8 is maintained in the rest position (heating mode) by the calibrated spring 9. In case of remarkable reduction of the water flow toward the heating system, the shutter 8 is urged and compress the spring 9 up to opening the passage toward the sanitary exchanger 4, thus creating a by-pass path.

The selection control of the way comes from outside by the linear motion actuator 11 maintaining the shutter 8 in a pre-established position in such a way to select the flows to be activated and those to be stopped.

In the starting condition, i.e. in the absence of a mechanical action by the actuator 11, valve according to the invention maintains always open the so called "rest" paths, while in case of mechanical action alternative paths, so called "excitation" paths, are opened.

In particular situations when the path activated by the valve (deviation) is obstructed by other adjustment members, it can be necessary for safety or utility reasons to activate an alternative path allowing in any case a minimum circulation.

It well evident that a valve like the one according to the invention allows to couple with the same shutter 8 the deviation function and a by-pass valve, being a remarkable advantage for a lower amount of materials necessary to manufacture the valves and a lower use of tubes necessary for the by-pass path with respect to the known solutions.

Although the solution shown has been realised to operate on the cold branch of the heating system, maintaining the same principle, it can be designed to operate on the "hot branch".

As already said, it is possible to realise valves of the above kind to be used in the same or different fields and providing one or more inlets and one or more outlets.

The movable element of the valve could assume two or more operation positions and thus two or more selectable conditions to switch the flows.

The by-pass function can be exploited prescinding from the application field, in any situation a design or occasional obstruction of the main circuit served by the deviation valve in the specific application occurs.

Valve body 14, shutter 8 and all the passive elements of the valve according to the invention, realised by the suitable materials on the basis of the specific application, and particularly metallic materials, for example aluminium, or plastic materials, or any other material.

Furthermore, the most suitable technology will be used (for example die-casting or sand casting, while when copper is used moulding or braze welding) and the most suitable shape will be adopted to satisfy the needing of the use of the valve.

Designing the valve according to the invention, in function of the application, it will be necessary to obtain a suitable mechanical resistance to withstand to the stresses induced by liquid inner pressure and by temperature variations, as well as to withstand to the fluid corrosivity and to the corrosivity of the eventual washing liquids for maintenance.

As already mentioned, body 14 of the valve can be separated or integral with a multi-functional hydraulic group.

As to the actuator 11, it will be chosen on the basis of the features necessary to operate the valve, preferably among those already available on the market, keeping in mind the parameters of maximum stroke, outlet and return speed of the piston, electric supply, force developed by the piston during its exit and return, spatial orientation of the shutter with respect to the gravity force and eventual dynamic actions, foreseen mechanical life as number of cycles. As already mentioned, actuator 11 could have a hydraulic, pneumatic, thermic, electric, or electronic control.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Deviation and by-pass valve, characterised in that it comprises a body valve, within which a chamber is obtained, at least a first and a second inlet opening and an outlet opening from said chamber, a shutter element, provided within said chamber, bucking means, within said chamber, acting in such a way to maintain said shutter element, when in its rest position, in a position to close said second inlet opening, and a linear actuator, acting on said shutter element, against the action of said bucking means, to move the same from its rest position, following an outer control, or a pressure variation within the circuit including the valve.

2. Deviation and by-pass valve according to claim 1, characterised in that said bucking means are comprised of a spring.

3. Deviation and by-pass valve according to one of the preceding claims, characterised in that said valve body is separated or integral with a complex hydraulic group.

4. Deviation and by-pass valve according to one of the preceding claims, characterised in that said linear actuator acts on said shutter element by a shaft.

5. Deviation and by-pass valve according to one of the preceding claims, characterised in that said linear actuator is provided with a hydraulic, pneumatic, thermic, electric or electronic control.

6. Deviation and by-pass valve according to each one of the preceding claims, substantially as illustrated and described.
